# EUROPEAN PATENT APPLICATION

(11) **EP 1 065 416 A2**
(43) Date of publication of application: **03.01.2001**
(21) Application number: 99125363.4
(22) Date of filing: 20.12.1999
(51) Int. Cl.: F16H 63/08

(54) **Command holder cover for the mechanical gearbox of a vehicle**

(30) Priority: 01.07.1999 IT TO990127 U
(71) Applicant: FIAT AUTO S.p.A., 10135 Torino (IT)
(72) Inventor: Bordenca, Calogero, 80040 Pollenta (NA) (IT); Pastorello, Valter, 10040 Cumiana (TO) (IT)
(74) Representative: Di Francesco, Gianni

(57) **Abstract**

The invention is directed to a cover (1) for the mechanical gearbox of a vehicle, equipped with seats for the mounting screws (3) and for the insertion and the support of the end section of the command group, as well as seats (18,19) for the support spindle of the control forks (8) of the forward gears.

## Description

The present invention relates to a mechanical gearbox for vehicles and more particularly to the mounting of its commands on the cover of said gearbox.

Other proceedings are known from the state of the art, for the pre-assembly of the gearbox commands, which provide for the line side pre-mounting of some of the components of the gearbox command system. In particular are known, the pre-assembly of the command levers of the command spindle and thereafter their mounting on the cover of the gearbox bearing the commands. According to the previous technique, it is also known the pre-assembling of the forks on the spindle and the subsequent insertion of the mounted group in the gearbox, before it is closed via the cover equipped with the above-described commands. The pre-assemblies described make it possible to save time when mounting the gearbox, simplify processing and make component assembly possible in more appropriate areas. Pre-mounted pieces can also be tested before they are mounted on the gearbox.

The object of the present invention is to increase the possibility of implementing the above mentioned conditions, allowing for the line side pre-assembly of a larger number of components, without necessarily limiting the overall reliability of the gearbox.

This object is achieved by the present invention, which deals with the cover for the case of a mechanical gearbox for motor vehicles, presenting the characteristics claimed in claim 1.

Other characteristics and advantages will appear clear in the following description, reference being made to the accompanying drawings, provided for illustration purposes only :

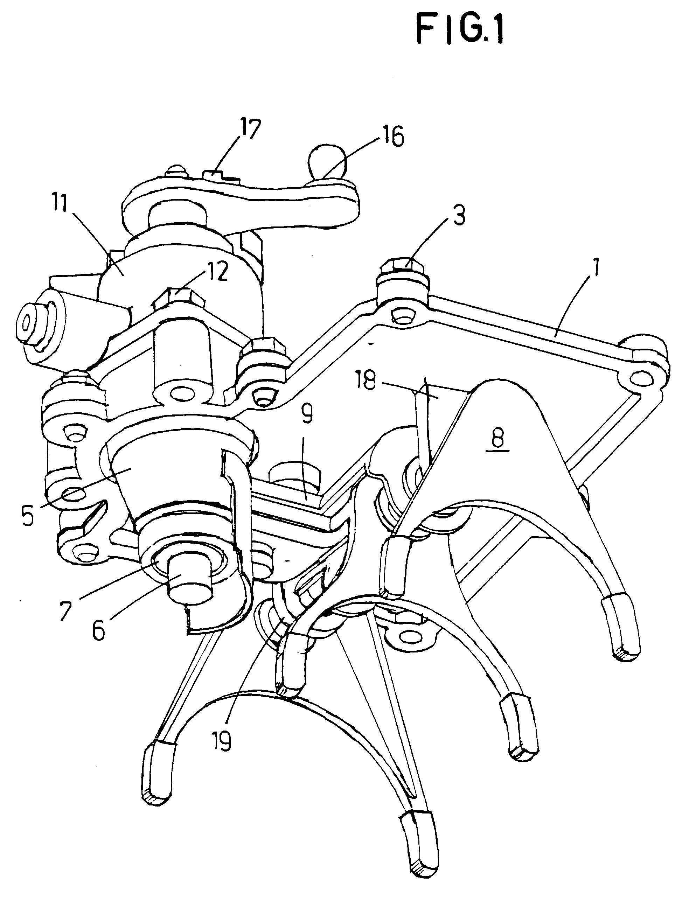

- Figure 1 is a perspective view of the cover object of this invention;

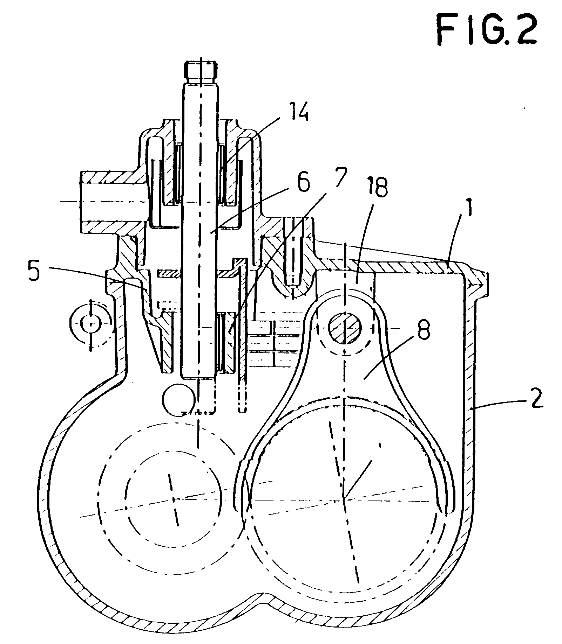

- Figure 2 is a transversal sectional view of the cover in Figure 1; with the command spindle and the group of forward gear forks.

Reference being made to the figures, whereby 1 indicates the cover of case 2 of the mechanical gearbox of a vehicle, equipped with screws 3 to mount said cover on said case. A seat 5 on the cover is obtained by fusion and is designed to house the end of command spindle 6 of the gearbox, which can rotate and move in a roller bearing 7. Said end includes a driving nib (not visible) that engages the various forks 8 for getting into each gear once respective nib 9 has been selected via the movement of spindle 6. A support 11 is connected via screws 12 to cover 1 and allows the retention of a second bearing 14 where the other end section of spindle 1 rotates and moves. Said end section being connected to command levers 16 and 17 for the selection and insertion of the gears. Two brackets 18 and 19, obtained by fusion, make it possible to connect the assembly of the gearbox command forks acting on secondary shaft 21, except for the fork of the reverse gear, to cover 1, in an appropriate position.

Consequently, the cover of the present invention, equipped with both the seat for the spindle and the brackets for the command assembly of the forks, makes it possible to assemble the gearbox commands on the line side, and to test them before they are mounted on the gearbox itself. This operation is very easy and is simplified by the fact that all the commands are already assembled in an operational position.

## Claims

1. Cover for the case of a mechanical gearbox for motor vehicles, equipped with seats for the mounting screws and characterised by the fact that is equipped with either a seat (5) for the insertion and the support of the end section of the command group with the spindle (6) for gearbox selection and insertion, or with seats (18, 19) for the connection of the support spindle of the group of forks (8) for the insertion of the forward gears, making it possible to mount the two groups at the side of the assembly line of the gearbox.

2. Cover according to claim 1, characterised by the fact that the seats (5, 18, 19) are obtained by fusion.
